# FASCICULE DE BREVET EUROPEEN

(11) **EP 2 656 482 B1**
(45) Date de publication et mention de la délivrance du brevet: **29.08.2018**
(21) Numéro de dépôt: 11818921.6
(22) Date de dépôt: 22.12.2011
(51) Int. Cl.: H02K 19/18, H02K 21/20, H02K 37/18

(54) **MACHINE HOMOPOLAIRE**
GLEICHPOLMASCHINE
HOMOPOLAR MACHINE

(30) Priorité: 22.12.2010 FR 1061084; 22.12.2011 FR 1162333
(43) Date de publication de la demande: 30.10.2013
(73) Titulaire: SINTERTECH, 38113 Veurey - Voroize (FR)
(72) Inventeur: BERNOT, François, F-37230 Luynes (FR)
(74) Mandataire: Derambure Conseil
(86) Numéro de dépôt international: PCT/FR2011/053171
(87) Numéro de publication internationale: WO 2012/089972

(56) Documents cités:
- EP-A1- 1 667 310
- WO-A2-2005/017318
- DE-A1- 19 614 862
- FR-A1- 2 828 027
- US-A1- 2007 145 834
- US-A1- 2008 067 880
- US-A1- 2008 211 355
- US-A1- 2009 021 089
- James Hendershot: "A five-phase switched reluctance brushless DC motor with a low-loss magnetic circuit", , 1 January 1989 (1989-01-01), XP55291229, Retrieved from the Internet: URL:http://www.jimhendershot.com/Jim_Hende rshot/Articles_files/fivephasesrbrushlessd cwithlowlossmagneticcircuit.pdf [retrieved on 2016-07-26]
- Krzysztof Bienkowski ET AL: "Five phase switched reluctance motor with short flux path for low speed applications and mechatronics", 5th Polish-German Mechatronic Workshop 2005, 1 June 2005 (2005-06-01), pages 104-109, XP55291204, Retrieved from the Internet: URL:https://www.researchgate.net/profile/K rzysztof_Bienkowski2/publication/258668698 _Five_phase_switched_reluctance_motor_with _short_flux_path_for_low_speed_application s_and_mechatronics/links/00b7d528ca47fc0f9 e000000.pdf?origin=publication_detail [retrieved on 2016-07-26]
- JING HUANG ET AL: "Extending voltage range and reducing torque ripple of five-phase motor drives with added voltage harmonics", APPLIED POWER ELECTRONICS CONFERENCE AND EXPOSITION, 2008. APEC 2008. TWENTY-THIRD ANNUAL IEEE, IEEE, PISCATAWAY, NJ, USA, 24 February 2008 (2008-02-24), pages 866-872, XP031253348, ISBN: 978-1-4244-1873-2

## Description

### DESCRIPTION

La présente invention concerne une machine homopolaire.

Un moteur homopolaire connu comporte généralement :
- un rotor,
- un stator par rapport auquel le rotor est destiné à tourner, comportant des bobines chacune destinée à être parcourue par un courant angulaire pour générer un champ magnétique dans le rotor,
- un générateur de courant destiné à fournir les courants angulaires parcourant les bobines.

Chaque bobine est renfermée dans une cage torique respective et forme une phase de la machine homopolaire.

Un tel moteur est en particulier connu dans le cas triphasé comme le divulgue par exemple le document FR 2 828 027. Dans ce cas, il existe trois bobines renfermées respectivement dans trois cages toriques, un courant triphasé étant fourni aux bobines.

Il peut être souhaité d'augmenter l'efficacité des machines homopolaires.

A cet effet, il est proposé une machine homopolaire selon la revendication 1 comportant :
- un rotor,
- un stator par rapport auquel le rotor est destiné à tourner, comportant des bobines chacune destinée à être parcourue par un courant angulaire pour générer un champ magnétique dans le rotor,
- un générateur de courant destiné à fournir les courants angulaires parcourant les bobines,
caractérisée en ce que les bobines sont au nombre d'au moins quatre, et en ce que les courants angulaires forment un courant polyphasé, d'un nombre de phases égal au nombre de bobines.

En effet, il a été trouvé qu'avec un nombre de phases supérieur ou égal à quatre, certaines harmoniques inverses selon la transformation de Fortescue (qui consiste à représenter une machine homopolaire comme la superposition de trois machines dont une, dite machine inverse, qui s'oppose au mouvement souhaité) pouvaient être réduites dans le courant et dans le couple moteur.

De façon optionnelle, la machine homopolaire comporte en outre, pour chaque bobine, un dispositif de concentration du champ magnétique.

De façon optionnelle, pour chaque bobine, le dispositif de concentration comporte une cage torique entourant le stator et renfermant la bobine.

De façon optionnelle, les bobines sont au nombre d'au moins cinq, de préférence de cinq.

De façon optionnelle, les bobines sont au nombre d'au moins sept, de préférence de sept.

De façon optionnelle, les bobines sont au nombre d'au moins onze, de préférence de onze.

En référence à la figure unique, un exemple de machine homopolaire, portant la référence générale 100, conforme à l'invention, va à présent être décrit. Dans l'exemple décrit, la machine homopolaire 100 est un moteur homopolaire.

La machine homopolaire 100 comporte tout d'abord un rotor 102 destiné à tourner autour d'un axe de rotation AA'. Le rotor 102 est magnétisé par exemple soit par des bobines solidaires du rotor 102 parcourues par un courant continu, soit par des aimants permanents solidaires du rotor 102. Le rotor 102 est est de forme cylindrique centrée sur l'axe AA'.

Dans l'exemple décrit, le rotor 102 est magnétisée par des bobines de sorte que la machine homopolaire 100 comporte en outre un premier générateur de courant 104 destiné à fournir un courant i de magnétisation du rotor 102.

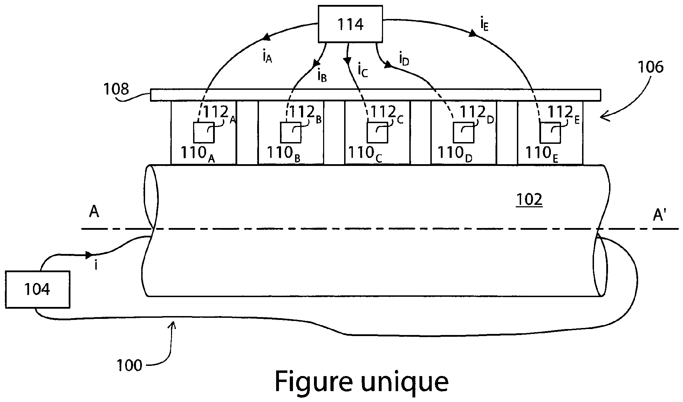

La machine homopolaire 100 comporte en outre un stator 106 par rapport auquel le rotor 102 est destiné à tourner. Sur la figure 1, seule la moitié supérieure du stator 106 est représentée.

Le stator 106 comporte tout d'abord un boîtier 108. Le boîtier est de forme cylindrique creuse centrée sur l'axe AA'.

Le stator 106 comporte en outre cinq cages toriques 110_{A}, 110_{B}, 110_{C}, 110_{D}, 110_{E} (parfois appelées « galettes statoriques ») entourant le rotor 102 autour de l'axe de rotation AA', et elles-mêmes entourées par le boîtier 108.

Le stator 106 comporte en outre cinq bobines 112_{A}, 112_{B}, 112_{C}, 112_{D} et 112_{E} enfermées respectivement dans les cages toriques 110_{A}, 110_{B}, 110_{C}, 110_{D}, 110_{E} et chacune destinée à être parcourue par un courant angulaire noté respectivement i_{A}, i_{B}, i_{C}, i_{B}, i_{E}.

La machine homopolaire 100 comporte un second générateur de courant 114 destiné à fournir les courants i_{A}, i_{B}, i_{C}, i_{D}, i_{E} parcourant les bobines 112_{A}, 112_{B}, 112_{C}, 112_{D}, 112_{E}. Les cinq courants i_{A}, i_{B}, i_{C}, i_{D}, i_{E} forment un courant pentaphasé.

Chaque bobine 112_{A}, 112_{B}, 112_{C}, 112_{D}, 112_{E} présente deux extrémités, appelées respectivement première et seconde extrémités. Les bobines sont connectées en étoile 112_{A}, 112_{B}, 112_{C}, 112_{D}, 112_{E}, ce qui signifie que les bobines 112_{A}, 112_{B}, 112_{C}, 112_{D}, 112_{E} sont connectées ensemble par leur secondes extrémités, tandis que leur premières extrémités sont connectées au second générateur de courant afin de resepctivement recevoir les courants i_{A}, i_{B}, i_{C}, i_{D}, i_{E}.

Le fonctionnement de la machine homopolaire 100 va à présent être décrit.

Le second générateur de courant 114 fournit les courants i_{A}, i_{B}, i_{C}, i_{D}, i_{E} aux bobines 112_{A}, 112_{B}, 112_{C}, 112_{D}, 112_{E}. Ces dernières produisent en conséquence un champ magnétique dans le rotor 102.

Le premier générateur de courant 104 fournit le courant i pour magnétiser le rotor 102 qui, du fait de sa magnétisation et du champ magnétique des bobines du stator 106, entre en rotation.

L'invention n'est pas limitée aux exemples décrits précédemment, mais au contraire définie par les revendications qui suivent.

Par exemple, les bobines pourraient être connectées en triangle et non en étoile.

En outre, une machine homopolaire conforme à l'invention peut présenter un autre nombre de bobines, par exemple sept ou onze, alimentées par un courant respectivement à sept phases et à onze phases. Le choix du nombre de bobines sera réalisé en fonction des harmonies inverses dont la réduction est souhaitée.

Il apparaîtra en effet à l'homme de l'art que diverses modifications peuvent être apportées aux exemples de mise en oeuvre décrits ci-dessus, à la lumière de l'enseignement qui vient de lui être divulgué.

Par ailleurs, dans les revendications qui suivent, les termes utilisés ne doivent pas être interprétés comme limitant les revendications aux éléments des exemples de mise en oeuvre décrits précédemment, mais doivent être interprétés pour y inclure tous les équivalents dont la prévision est à la portée de l'homme de l'art en appliquant ses connaissances générales.

## Revendications

1. Machine homopolaire comportant :
- un rotor (102),
- un stator (106) par rapport auquel le rotor (102) est destiné à tourner autour d'un axe de rotation (AA'), comportant des bobines (112_{A}, 112_{B}, 112_{C}, 112_{D}, 112_{E}), chacune destinée à être parcourue par un courant angulaire (i_{A}, i_{B}, i_{C}, i_{D}, i_{E}) par rapport à l'axe de rotation (AA') pour générer un champ magnétique dans le rotor (102),
- un générateur de courant (114) destiné à fournir les courants angulaires (i_{A}, i_{B}, i_{C}, i_{D}, i_{E}) parcourant les bobines (112_{A}, 112_{B}, 112_{C}, 112_{D}, 112_{E}),
**caractérisée en ce que** les bobines (112_{A}, 112_{B}, 112_{C}, 112_{D}, 112_{E}) sont au nombre d'au moins quatre, et **en ce que** les courants angulaires (i_{A}, i_{B}, i_{C}, i_{D}, i_{E}) forment un courant polyphasé, d'un nombre de phases égal au nombre de bobines (112_{A}, 112_{B}, 112_{C}, 112_{D}, 112_{E}),
et **en ce que** la machine homopolaire comporte en outre, pour chaque bobine (112_{A}, 112_{B}, 112_{C}, 112_{D}, 112_{E}), un dispositif (110_{A}, 110_{B}, 110_{c}, 110_{D}, 110_{E}) de concentration du champ magnétique lequel dispositif de concentration comporte une cage torique entourant le stator (102) et renfermant la bobine (112_{A}, 112_{B}, 112_{C}, 112_{D}, 112_{E}).

2. Machine homopolaire selon la revendication 1, dans laquelle les bobines (112_{A}, 112_{B}, 112_{C}, 112_{D}, 112_{E}) sont au nombre d'au moins cinq, de préférence de cinq.

3. Machine homopolaire selon la revendication 1, dans laquelle les bobines sont au nombre d'au moins sept, de préférence de sept.

4. Machine homopolaire selon la revendication 1, dans laquelle les bobines sont au nombre d'au moins onze, de préférence, de onze.

## Patentansprüche

1. Gleichpolmaschine, umfassend:
- einen Rotor (102),
- einen Stator (106), bezüglich welchem der Rotor (102) vorgesehen ist, sich um eine Rotationsachse (AA') zu drehen, umfassend Spulen (112_{A}, 112_{B}, 112_{C}, 112_{D}, 112_{E}), von welchen jede dazu vorgesehen ist, von einem Drehstrom (i_{A}, i_{B}, i_{C}, i_{D}, i_{E}) bezüglich der Rotationsachse (AA') durchflossen zu werden, um ein magnetisches Feld in dem Rotor (102) zu erzeugen,
- einen Stromgenerator (114), welcher dazu vorgesehen ist, die Drehströme (i_{A}, i_{B}, i_{C}, i_{D}, i_{E}) zu erzeugen, welche durch die Spulen (112_{A}, 112_{B}, 112_{C}, 112_{D}, 112_{E}) fließen,
**dadurch gekennzeichnet, dass** die Spulen (112_{A}, 112_{B}, 112_{C}, 112_{D}, 112_{E}) zahlenmäßig wenigstens vier sind, und dass die Drehströme (i_{A}, i_{B}, i_{C}, i_{D}, i_{E}) einen mehrphasigen Strom bilden, welcher zahlenmäßig gleich der Anzahl von Spulen (112_{A}, 112_{B}, 112_{C}, 112_{D}, 112_{E}) ist,
und dass die Gleichpolmaschine ferner für jede Spule (112_{A}, 112_{B}, 112_{C}, 112_{D}, 112_{E}) eine Vorrichtung (110_{A}, 110_{B}, 110_{C}, 110_{D}, 110_{E}) zum Konzentrieren des magnetischen Felds umfasst, wobei die Vorrichtung zum Konzentrieren einen torusförmigen Käfig umfasst, welcher den Stator (102) umgibt und die Spule (112_{A}, 112_{B}, 112_{C}, 112_{D}, 112_{E}) enthält.

2. Gleichpolmaschine nach Anspruch 1, wobei die Spulen (112_{A}, 112_{B}, 112_{C}, 112_{D}, 112_{E}) zahlenmäßig wenigstens fünf sind, vorzugsweise fünf.

3. Gleichpolmaschine nach Anspruch 1, wobei die Spulen zahlenmäßig wenigstens sieben sind, vorzugsweise sieben.

4. Gleichpolmaschine nach Anspruch 1, wobei die Spulen zahlenmäßig wenigstens elf sind, vorzugsweise elf.

## Claims

1. Homopolar machine comprising:
- a rotor (102),
- a stator (106) relative to which the rotor (102) is intended to rotate about a rotational axis (AA'), comprising windings (112_{A}, 112_{B}, 112_{C}, 112_{D}, 112_{E}), each intended to have an angular current (i_{A}, i_{B}, i_{C}, i_{D}, i_{E}) relative to the rotational axis (AA') pass therethrough in order to generate a magnetic field in the rotor (102),
- a current generator (114) intended to supply the angular currents (i_{A}, i_{B}, i_{C}, i_{D}, i_{E}) passing through the windings (112_{A}, 112_{B}, 112_{C}, 112_{D}, 112_{E}),
**characterised in that** the windings (112_{A}, 112_{B}, 112_{C}, 112_{D}, 112_{E}) number at least four, and **in that** the angular currents (i_{A}, i_{B}, i_{C}, i_{D}, i_{E}) form a multiphase current having a number of phases equal to the number of windings (112_{A}, 112_{B}, 112_{C}, 112_{D}, 112_{E}),
and **in that** the homopolar machine further comprises, for each winding (112_{A}, 112_{B}, 112_{C}, 112_{D}, 112_{E}), a device (110_{A}, 110_{B}, 110_{c}, 110_{D}, 110_{E}) for concentrating the magnetic field, which concentrating device comprises a toroidal cage winding surrounding the stator (102) and enclosing the winding (112_{A}, 112_{B}, 112_{C}, 112_{D}, 112_{E}).

2. Homopolar machine according to claim 1, wherein the windings (112_{A}, 112_{B}, 112_{C}, 112_{D}, 112_{E}) number at least five and preferably five.

3. Homopolar machine according to claim 1, wherein the windings number at least seven and preferably seven.

4. Homopolar machine according to claim 1, wherein the windings number at least eleven, and preferably eleven.
